# EUROPÄISCHE PATENTANMELDUNG

(11) **EP 4 223 595 A1**
(43) Veröffentlichungstag der Anmeldung: **09.08.2023**
(21) Anmeldenummer: 23153312.6
(22) Anmeldetag: 25.01.2023
(51) Int. Cl.: B60R 22/18, B60N 2/00, B60R 22/22, B60R 22/26, B60N 2/68

(54) **GURTGESTELL FÜR EINEN FAHRZEUGSITZ**

(30) Priorität: 04.02.2022 DE 102022102684
(71) Anmelder: Aguti Produktentwicklung & Design GmbH, 88085 Langenargen (DE)
(72) Erfinder: Rogg, Christian, 88142 Wasserburg (DE)
(74) Vertreter: Otten, Roth, Dobler & Partner mbB Patentanwälte

(57) **Zusammenfassung**

Gurtgestell (1, 12, 20, 28, 36, 39) für einen Fahrzeugsitz oder eine Fahrzeugsitzbank in einem Fahrzeug, wobei das Gurtgestell ein Anbringelement (13, 22, 30, 41) und eine Vertikalstrebe (4, 21, 29, 35, 40) aufweist, wobei das Anbringelement dazu ausgebildet ist, an einer Fahrzeugstruktur des Fahrzeugs im Bereich eines Fahrzeugbodens (2) angeordnet zu werden, sodass das Gurtgestell im Bereich des Fahrzeugbodens fixierbar ist, wobei die Vertikalstrebe an einem ersten Ende (5) der Vertikalstrebe mit dem Anbringelement verbunden ist, wobei die Vertikalstrebe ein zweites Ende aufweist, wobei im Bereich des zweiten Endes der Vertikalstrebe ein Rückhalteelement (8) eines Personenrückhaltesystems (6) ausgebildet ist, wobei das zweite Ende der Vertikalstrebe vom ersten Ende der Vertikalstrebe beabstandet vorhanden ist, wobei eine Längsachse der Vertikalstrebe vom ersten Ende der Vertikalstrebe zum zweiten Ende der Vertikalstrebe verläuft, wobei die Vertikalstrebe vom ersten Ende zum zweiten Ende geradlinig verläuft, wobei im angeordneten Zustand des Gurtgestells an einem Fahrzeugboden des Fahrzeugs die Längsachse der Vertikalstrebe relativ zu der Normalen einer Ebene des Fahrzeugbodens gekippt vorhanden ist.

## Beschreibung

### Stand der Technik

Vorrichtungen zur Anordnung eines Personenrückhaltesystems in einem Verkehrsmittel sind bekannt, beispielsweise zur Anbringung einer Sicherheitsgurtanordnung zur Personensicherung und von Komponenten eines dazugehörigen Personensitzes im Verkehrsmittel. Solche Vorrichtungen werden auch als Gurtgestelle bezeichnet.

In Verkehrsmitteln, wie Fahrzeugen, beispielsweise Personenkraftwagen, Kleinbussen, Wohnmobilen oder Camping-Mobilen werden solche Vorrichtungen als eine Baueinheit für einen nach der Herstellung des Fahrzeugs nachträglichen Einbau im Fahrzeuginneren bereitgestellt. Die Vorrichtung mit dem daran vorhandenen Personenrückhaltesystem muss für im Fahrzeug auftretende maximale Belastungssituationen ausgelegt sein, die insbesondere im Zusammenhang mit Unfallszenarien im Straßenverkehr auftreten können.

Bei der Auslegung der Vorrichtung sind insbesondere Sicherheits- bzw. Stabilitätskriterien zu erfüllen, welche zum Beispiel für eine Zulassung der Vorrichtung bzw. des Fahrzeugs erforderlich sind. Die kostengünstige und wirtschaftlich vorteilhafte Ausbildung bzw. Herstellung der Vorrichtung stellt dabei eine besondere Herausforderung dar.

### Aufgabe und Vorteile der Erfindung

Aufgabe der vorliegenden Erfindung ist es, eine verbessertes Gurtgestell der einleitend beschriebenen Art bereitzustellen. Beispielsweise soll ein verbessertes Gurtgestell bereitgestellt werden, bei welchem technische und wirtschaftliche Verbesserungen unter Beibehaltung von Stabilitäts- und Sicherheitskriterien vorteilhaft erfüllt werden.

Diese Aufgabe wird durch die unabhängigen Ansprüche gelöst.

Die abhängigen Ansprüche betreffen vorteilhafte und zweckmäßige Weiterbildungen der Erfindung.

Die Erfindung geht von einem Gurtgestell für einen Fahrzeugsitz oder eine Fahrzeugsitzbank in einem Fahrzeug aus, wobei das Gurtgestell ein Anbringelement und eine Vertikalstrebe aufweist, wobei das Anbringelement dazu ausgebildet ist, an einer Fahrzeugstruktur des Fahrzeugs im Bereich eines Fahrzeugbodens des Fahrzeugs angeordnet zu werden, sodass das Gurtgestell im Bereich des Fahrzeugbodens fixierbar ist, wobei die Vertikalstrebe an einem ersten Ende der Vertikalstrebe mit dem Anbringelement verbunden ist, wobei die Vertikalstrebe ein zweites Ende aufweist, wobei im Bereich des zweiten Endes der Vertikalstrebe ein Rückhalteelement eines Personenrückhaltesystems ausgebildet ist, wobei das zweite Ende der Vertikalstrebe vom ersten Ende der Vertikalstrebe beabstandet vorhanden ist, wobei eine Längsachse der Vertikalstrebe vom ersten Ende der Vertikalstrebe zum zweiten Ende der Vertikalstrebe verläuft, wobei die Vertikalstrebe vom ersten Ende zum zweiten Ende geradlinig verläuft.

Zum Beispiel ist das Fahrzeug als ein Automobil, als ein Autobus, als ein Lastkraftwagen (LKW), als ein Caravan, als ein Wohnmobil oder auch als ein Camping-Mobil ausgebildet.

Ein Personenrückhaltesystem ist beispielsweise als eine Sicherheitsgurtanordnung, z.B. als ein Mehrpunktgurt-Sicherheitssystem oder als ein Dreipunktgurt-Sicherheitssystem ausgebildet. Beispielsweise ist am Gurtgestell eine Komponente des Personenrückhaltesystems anbringbar. Beispielsweise ist eine derartige Komponente als ein Rückhalteelement vorhanden. Zum Beispiel ist eine derartige Komponente als ein Gurtaufroller, als eine Gurtumlenkanordnung zur Richtungsänderung des daran vorbeigeführten Gurts, als eine Halterung zur Fixierung eines Gurtendes eines Gurts des Personenrückhaltesystems und/oder als ein Gurtschloss, an dem ein Einsteckteil lösbar einrastbar ist, vorhanden. Beispielsweise ist der Gurt mittels des Einsteckteils als eine Schlaufe ausziehbar vorhanden.

Beispielsweise muss das vorgeschlagene Gurtgestell konstruktiv bzw. mechanisch so ausgelegt sein, um einer maximal tolerierbaren bzw. möglichen Belastung, insbesondere bei dynamischen Belastungsvorgängen, einen ausreichenden Widerstand entgegensetzen zu können, also entsprechende Kräfte und Momente aufzunehmen und weitergeben zu können. Beispielsweise muss das vorgeschlagenen Gurtgestell die vorhandenen Normen zur Typengenehmigung in Fahrzeugen erfüllen. Zum Beispiel muss das Gurtgestell die Verordnung (EG) 661/2009 des Europäischen Parlaments und des Rates und deren Änderungsnormen, die Verordnung (EU) 407/2011 des Europäischen Parlaments und des Rates der Europäischen Union und/oder die Regelung Nr. 14 der Wirtschaftskommission der Vereinten Nationen für Europa (UN/ECE) erfüllen.

Beispielsweise erstreckt sich die Ebene des Fahrzeugbodens in Fahrtrichtung des Fahrzeugs. Denkbar ist auch, dass die Ebene des Fahrzeugbodens sich quer zur Fahrtrichtung des Fahrzeugs erstreckt. Vorstellbar ist, dass der Fahrzeugboden als ein Innenraumfahrzeugboden vorhanden ist. Vorstellbar ist auch, dass eine Fahrzeugträgerstruktur des Fahrzeugs den Fahrzeugboden bildet. Zum Beispiel ist die Ebene des Fahrzeugbodens parallel zu einer Fahrebene des Fahrzeugs ausgerichtet vorhanden. Beispielsweise ist die Fahrtrichtung des Fahrzeugs in eine Sitzrichtung oder Blickrichtung eines Fahrers des Fahrzeugs zur Fahrzeugfront des Fahrzeugs zu sehen. Zum Beispiel ist die Fahrtrichtung des Fahrzeugs eine Fahrtrichtung des Fahrzeugs in Vorwärtsrichtung. Zum Beispiel wird die Fahrebene des Fahrzeugs durch eine Straße gebildet, auf welcher das Fahrzeug fährt. Beispielsweise erstreckt sich die Fahrtrichtung des Fahrzeugs in einer Richtung von einem Fahrzeugheck des Fahrzeugs zur Fahrzeugfront des Fahrzeugs.

Beispielsweise ist das Rückhalteelement im Bereich des zweiten Endes der Vertikalstrebe als ein Gurtumlenkelement, z.B. als eine Gurtumlenkrolle, ausgebildet. Denkbar ist jedoch auch, dass das Rückhalteelement als ein Gurtumlenkpunkt oder als ein Gurtankerpunkt vorhanden ist. Beispielsweise ist das Rückhalteelement in Form einer Öse oder einer Öffnung vorhanden. Zum Beispiel ist durch die Öse oder die Öffnung der Gurt des Personenrückhaltesystems durchführbar, sodass die Öse oder die Öffnung eine Führung für den Gurt bildet.

Beispielsweise umfasst das Personenrückhaltesystem einen Gurt, einen Gurtaufroller, eine Gurtschließe, ein Gurtschloß und das Rückhalteelement. Zum Beispiel ist das Personenrückhaltesystem als ein 3-Punkt-Gurtsystem ausgebildet. Zum Beispiel ist der Gurt als ein Sicherheitsgurt vorhanden.

Vorstellbar ist auch, dass bis auf das Rückhalteelement, welches an der Vertikalstrebe vorhanden ist, alle weiteren Elemente des Gurtrückhaltesystems an anderen Organen des Gurtgestells und/oder der mit dem Gurtgestell bildbaren Fahrzeug-Sitzanordnung angeordnet sind, wobei die anderen Organe verschieden sind zur Vertikalstrebe. Beispielsweise ist das Rückhaltelement unmittelbar mit der Vertikalstrebe verbunden. Beispielsweise sind das Rückhalteelement und die Vertikalstrebe unlösbar miteinander verbunden. Zum Beispiel sind das Rückhalteelement und die Vertikalstrebe miteinander verschweißt.

Beispielsweise umfasst das Gurtgestell das Personenrückhaltesystem.

Zum Beispiel ist die Vertikalstrebe einstückig ausgebildet. Denkbar ist, dass die Vertikalstrebe als ein Vierkantrohr vorhanden ist. Beispielweise ist die Vertikalstrebe aus Metall ausgebildet. Beispielsweise verläuft die Vertikalstrebe vom ersten Ende zum zweiten Ende durchgehend geradlinig.

Beispielsweise erstreckt sich die Vertikalstrebe entlang der Längsachse vom ersten Ende bis zum zweiten Ende über eine Länge größer 0,4m, größer 0,5m, größer 0,6m, größer 0,7m, größer 0,8m oder größer 0,9m. Zum Beispiel erstreckt sich die Vertikalstrebe entlang der Längsachse vom ersten Ende bis zum zweiten Ende über eine Länge von bis zu 1,7m, bis zu 1,8m, bis zu 1,9m oder bis zu 2m. Vorstellbar ist, dass die Vertikalstrebe entlang der Längsachse vom ersten Ende bis zum zweiten Ende eine Länge zwischen 0,4m und 2m, zwischen 0,4m und 1,7m oder zwischen 0,5m und 1,7m aufweist.

Beispielsweise umfasst das Gurtgestell eine einzige Vertikalstrebe. Hierdurch ist das Gurtgestell vergleichsweise kostengünstig ausbildbar oder vergleichsweise einfach herstellbar. Denkbar ist aber auch, dass das Gurtgestell genau zwei Vertikalstreben aufweist. Vorstellbar ist, dass die genau zwei Vertikalstreben in einer Richtung quer zu den Längsachsen der Vertikalstreben voneinander beabstandet vorhanden sind. Zum Beispiel sind die genau zwei Vertikalstreben entlang ihrer Längsachsen miteinander verbunden, z.B. unmittelbar miteinander verbunden. Beispielsweise sind die Längsachsen der beiden Vertikalstreben zueinander parallel ausgerichtet vorhanden.

Der Kern der Erfindung wird darin gesehen, dass im angeordneten Zustand des Gurtgestells am Fahrzeugboden des Fahrzeugs die Längsachse der Vertikalstrebe relativ zu der Normalen einer Ebene des Fahrzeugbodens gekippt vorhanden ist. Hierdurch ist ein Raum im Fahrzeug vergleichsweise besser nutzbar vorhanden.

Beispielsweise schließen die Längsachse der Vertikalstrebe und die Normale des Fahrzeugbodens einen Winkel α ein. Zum Beispiel ist der Winkel α größer als 0°. Beispielsweise ist der Winkel α zwischen größer 0° bis 45°, zwischen größer 0° bis 30°, zwischen größer 0° bis 25° oder zwischen 3° bis 25°. Zum Beispiel ist der Winkel α 3°, 4°, 5°, 6°, 7°, 8°, 9°, 10°, 15°, 20° oder 25° groß.

Beispielsweise ist die Längsachse der Vertikalstrebe im angeordneten Zustand des Gurtgestells am Fahrzeug quer, beispielsweise senkrecht, zur Fahrtrichtung des Fahrzeugs ausgerichtet vorhanden. Beispielsweise ist eine Kippung der Längsachse der Vertikalstrebe relativ zur Normalen der Ebene des Fahrzeugbodens quer zur Fahrtrichtung des Fahrzeugs im angeordneten Zustand des Gurtgestells am Fahrzeug zu sehen.

Auch wird vorgeschlagen, dass am Anbringelement ein Rückhalteorgan des Personenrückhaltesystems vorhanden ist. Hierdurch ist das Gurtgestell mit Elementen des Personenrückhaltesystems vergleichsweise kompakt aufgebaut. Beispielsweise ist am Anbringelement eine Gurtumlenkrolle des Personenrückhaltesystems befestigt.

Beispielsweise ist das Anbringelement als eine Platte oder eine Leiste vorhanden. Zum Beispiel ist das Anbringelement aus Metall ausgebildet. Denkbar ist, dass eine Längsachse des Anbringelements sich im angeordneten Zustand des Gurtgestells am Fahrzeug quer zur Fahrtrichtung des Fahrzeugs erstreckt. Beispielsweise erstreckt sich die Längsachse des Anbringelements senkrecht zur Fahrtrichtung des Fahrzeugs. Zum Beispiel erstreckt sich das Anbringelement in einer Anbringelementebene. Beispielsweise ist im angeordneten Zustand des Gurtgestells am Fahrzeug die Anbringelementebene parallel zur Ebene des Fahrzeugbodens ausgerichtet vorhanden.

Zum Beispiel schließen die Längsachse der Vertikalstrebe und die Anbringelementebene oder schließen die Längsachse der Vertikalstrebe und die Ebene des Fahrzeugbodens einen Winkel β ein. Zum Beispiel ist der Winkel β kleiner als 90°. Beispielsweise ist der Winkel β zwischen kleiner 90° bis 45°, zwischen kleiner 90° bis 60°, zwischen kleiner 90° bis 65° oder zwischen 87° bis 65°. Zum Beispiel ist der Winkel β 87°, 86°, 85°, 84°, 83°, 82°, 81°, 80°, 75°, 70° oder 65° groß.

Beispielsweise ist die Vertikalstrebe am ersten Ende mit dem Anbringelement fest, z.B. unlösbar verbunden. Vorstellbar ist, dass die Vertikalstrebe am ersten Ende mit dem Anbringelement verschweißt ist. Denkbar ist auch, dass die Vertikalstrebe am ersten Ende mit dem Anbringelement verschraubt oder vernietet ist.

Außerdem wird vorgeschlagen, dass das Anbringelement eine Anbringebene aufweist, wobei das Anbringelement mit der Anbringebene am Fahrzeugboden des Fahrzeugs und/oder einer Fahrzeugstruktur des Fahrzeugs anliegend montierbar iat, wobei die Längsachse der Vertikalstrebe zur Normalen der Anbringebene des Anbringelements gekippt vorhanden ist. Beispielsweise sind die Normale der Anbringebene und die Normale der Ebene des Fahrzeugbodens im angeordneten Zustand des Gurtgestells zueinander parallel ausgerichtet vorhanden.

Beispielsweise weist das Anbringelement eine Anbringebene auf, wobei das Anbringelement mit der Anbringebene anliegend an den Fahrzeugboden anordenbar ist. Zum Beispiel ist die Anbringelementebene und die Anbringebene parallel ausgerichtet vorhanden. Denkbar ist, dass die Anbringelementebene die Anbringebene bildet. Beispielsweise erstreckt sich die Anbringelementebene im angeordenten Zustand des Gurtgestells am Fahrzeug in die Fahrtrichtung des Fahrzeugs.

Außerdem wird vorgeschlagen, dass das Gurtgestell eine Horizontalstrebe aufweist, wobei die Horizontalstrebe an der Vertikalstrebe angeordnet ist, wobei die Horizontalstrebe vom Anbringelement beabstandet vorhanden ist. Beispielsweise ist durch die Horizontalstrebe ein Gurtgestell für eine Fahrzeugsitzbank mit zwei oder mehr Sitzplätzen realisierbar.

Zum Beispiel verläuft eine Längsachse der Horizontalstrebe quer zur Längsachse der Vertikalstrebe. Denkbar ist, dass die Längsachse der Horizontalstrebe quer zur Fahrtrichtung des Fahrzeugs vorhanden ist. Zum Beispiel ist die Längsachse der Horizontalstrebe senkrecht zur Fahrtrichtung des Fahrzeugs ausgerichtet. Beispielsweise ist die Längsachse der Horizontalstrebe quer zu der Normalen der Ebene des Fahrzeugbodens ausgerichtet.

Beispielsweise schließen die Längsachse der Horizontalstrebe und die Längsachse der Vertikalstrebe einen Winkel γ ein. Zum Beispiel ist der Winkel γ identisch zum Winkel β vorhanden. Zum Beispiel ist der Winkel γ kleiner als 90°. Beispielsweise ist der Winkel γ zwischen kleiner 90° bis 45°, zwischen kleiner 90° bis 60°, zwischen kleiner 90° bis 65° oder zwischen 87° bis 65°. Zum Beispiel ist der Winkel γ 87°, 86°, 85°, 84°, 83°, 82°, 81°, 80°, 75°, 70° oder 65° groß.

Beispielsweise ist die Vertikalstrebe und/oder die Horizontalstrebe als ein Hohlprofil ausgebildet. Im Querschnitt ist das Hohlprofil typischerweise rechteckig oder quadratisch vorhanden, denkbar ist aber auch, dass das Hohlprofil im Querschnitt rund oder elliptisch ausgebildet ist. Ein typisches Längen- und/oder Breitenmaß bzw. Seitenmaß des Querschnitts des Hohlprofils beträgt ca. 20 bis 40 Millimeter. Beispielsweise liegt eine Wanddicke des Hohlprofils in der Regel in einem einstelligen Millimeterbereich. Denkbar ist auch, dass das Hohlprofil als ein Mehrfachhohlprofil vorhanden ist. Beispielsweise ist die Horizontalstrebe als ein Vierkantrohr vorhanden.

Des Weiteren ist es vorstellbar, dass das Hohlprofil, insbesondere die Vertikalstrebe, eine Materialausnehmung z.B. eine Schlitzung aufweist, welche als Soll-Biegestelle im Belastungsfall des angeordneten Gurtgestells, z.B. in einem Crashfall des Fahrzeugs ausgebildet ist. Damit ist ein plastisches Verformungsverhalten der Vertikalstrebe in einem Belastungsfall beeinflussbar, insbesondere vorgebbar. Beispielsweise erstreckt sich die Ausnehmung an der Vertikalstützte insbesondere in horizontaler Richtung über eine Vorderseite der Vertikalstrebe und über zumindest einen an die Vorderseite anschließenden seitlichen Bereich der Vertikalstrebe. Zum Beispiel erstreckt sich die Materialausnehmung abschnittsweise auf der Vorderseite und auf zwei seitlich an die Vorderseite anschließende sich gegenüberliegende seitliche Bereiche der Vertikalstrebe. Die Vorderseite ist bezogen auf einen Anbringzustand des Gurtgestells im Fahrzeug zu verstehen und damit beispielsweise im angeordneten Zustand am Fahrzeug der Fahrzeugfront zugewandt.

Ein mit dem Gurtgestell bildbarer Fahrzeug- bzw. Personensitz weist demgemäß eine Sitzstruktur mit einer Sitzfläche auf, welche sich an der Vorderseite des Personensitzes und damit an der Vorderseite des Gurtgestell bzw. der Vorderseite der Vertikalstrebe und/oder einer Vorderseite der Horizontalstrebe befindet, wobei die Vorderseite der Vertikalstrebe und/oder die Vorderseite der Horizontalstrebe beispielsweise in Fahrtrichtung ausgerichtet ist.

Im eingebauten Zustand des Gurtgestells im Fahrzeug entspricht die relevante Belastungsrichtung in der Regel einer Sitzrichtung der gesicherten Person bzw. der Fahrtrichtung des Fahrzeugs. Bei einem Fahrzeug tritt eine maximale Belastung z.B. bei einem Aufprall des fahrenden Fahrzeugs gegen ein Hindernis auf, einem Crashfall. Aufgrund der abgebremsten Masse der im Fahrzeug sitzenden und gesicherten Person wird über den Sicherheitsgurt des Personenrückhaltesystems eine ruckartig wirkende Zugkraft bzw. ein daraus resultierendes Moment in der Belastungsrichtung bzw. in Fahrtrichtung an der Stützanordnung wirksam.

Weiter wird vorgeschlagen, dass ein Schließelement des Personenrückhaltesystems an der Horizontalstrebe vorhanden ist. Beispielsweise sind zwei Schließelemente an der Horizontalstrebe vorhanden, wobei die zwei Schließelemente voneinander beabstandet vorhanden sind. Vorstellbar ist auch, dass an der Horizontalstrebe ein Gurtschloss des Personenrückhaltesystems anordenbar oder angeordnet ist. Beispielsweise ist das Schließelement als ein Gurtschloss des Personenrückhaltesystems ausgebildet.

Auch wird vorgeschlagen, dass ein Schließelement des Personenrückhaltesystems am Anbringelement angeordnet ist. Hierdurch ist das Gurtgestell vergleichsweise kostengünstig herstellbar. Beispielsweise ist hierdurch eine Montage des Gurtgestells beispielsweise erleichtert, insbesondere vergleichsweise kostengünstig realisiert.

Beispielsweise ist das Schließelement als eine Gurtschließe und/oder als ein Gurtschloss ausgebildet.

Beispielsweise ist das Schließelement über ein Verlängerungselement am Anbringelement angeordnet. Zum Beispiel sind zwei oder mehr Schließelemente am Anbringelement angeordnet. Zum Beispiel ist das Verlängerungselement als eine Gurtpeitsche ausgebildet. Zum Beispiel sind am Anbringelement genau ein Schließelement, genau zwei Schließelemente oder genau drei Schließelemente angeordnet. Beispielsweise ist die Anzahl der Schließelemente am Anbringelement abhängig von der Anzahl der mit dem Gurtgestell realisierbaren Fahrzeugsitze.

Beispielsweise ist die Gurtpeitsche in Form eines Gurtbands, in Form eines Metallbands und/oder in Form einer Metallstrebe vorhanden.

Denkbar ist auch, dass am Anbringelement oder an der Vertikalstrebe ein Gurtaufroller befestigt ist. Beispielsweise ist das Rückhalteelement als ein Schließelement und/oder als ein Gurtaufroller ausgebildet. Beispielsweise ist der Sicherheitsgurt mit einem ersten Ende mit dem Anbringelement verbunden. Zum Beispiel ist der Sicherheitgurt mit dem ersten Ende unmittelbar mit dem Anbringelement verbunden. Beispielsweise ist der Sicherheitsgurt am ersten Ende des Sicherheitsgurts am Anbringelement befestigt. Zum Beispiel ist der Sicherheitsgurt mit einem zweiten Ende des Sicherheitsgurts mit dem Gurtaufroller verbunden. Beispielsweise ist der Sicherheitsgurt durch den Gurtaufroller aufrollbar oder aufwickelbar vorhanden. Beispielsweise erstreckt sich der Sicherheitsgurt vom ersten Ende bis zum zweiten Ende entlang seiner Längserstreckung.

Beispielsweise ist das Anbringelement als ein Winkelblech vorhanden. Beispielsweise ist das Anbringelement als eine abgewinkelte Platte vorhanden. Zum Beispiel ist das Anbringelement L-profilförmig oder U-profilförmig ausgebildet. Beispielsweise ist das Anbringelement als eine leistenförmige, z.B. abgewinkelte Platte vorhanden.

Beispielsweise umfasst das Gurtgestell ein Stützelement. Denkbar ist, dass das Stützelement in Form eines Stützfuß vorhanden ist. Zum Beispiel ist das Stützelement im angeordneten Zustand des Gurtgestells am Fahrzeug mit einem ersten Ende des Stützelements am Anbringelement anstehend vorhanden und mit einem zweiten Ende des Stützelements an der Vertikalstrebe angeordnet. Denkbar ist, dass das Stützelement mit dem zweiten Ende mit der Vertikalstrebe verschraubt und/oder verschweißt vorhanden ist.

Zum Beispiel ist das Stützelement aus Metall ausgebildet. Vorstellbar ist, dass das Stützelement als ein Vierkantrohr vorhanden ist. Denkbar ist auch, dass das Stützelement als ein Metallband oder als ein Metallblech vorhanden ist. Beispielsweise ist ein Stützelement als ein Blech und/oder als ein Winkelblech ausgebildet.

Beispielsweise ist das Stützelement leistenförmig ausgebildet. Beispielweise umfasst das Stützelement an seinen Enden Verbindungselemente zum Verbinden des Stützelements mit der Vertikalstrebe, dem Fahrzeugboden und/oder dem Anbringelement.

Weiter wird vorgeschlagen, dass das Gurtgestell ein Stützelement umfasst, wobei das Stützelement mit einem ersten Ende am Anbringelement angeordnet ist und mit einem zweiten Ende an der Vertikalstrebe angeordnet ist, wobei das erste Ende des Stützelements vom zweiten Ende des Stützelements beabstandet vorhanden ist.

Beispielsweise erstreckt sich das Stützelement ausgehend vom zweiten Ende des Stützelements in Fahrtrichtung weg von der Vertikalstrebe in Richtung Fahrzeugboden. Denkbar ist auch, dass das Stützelement sich ausgehend vom zweiten Ende des Stützelements entgegen der Fahrtrichtung weg von der Vertikalstrebe in Richtung Fahrzeugboden erstreckt.

Zum Beispiel weist die Vertikalstrebe einen Anbindungsbereich zur Anbindung des zweiten Endes des Stützelements auf. Beispielsweise ist das Stützelement mit seinem zweiten Ende am Anbindungsbereich mit der Vertikalstrebe verschraubt und/oder verschweißt. Zum Beispiel ist der Anbindungsbereich der Vertikalstrebe ausgehend vom ersten Ende der Vertikalstrebe zwischen dem Anbringelement und der Horizontalstrebe ausgebildet. Beispielsweise ist der Anbindungsbereich ausgehend vom ersten Ende der Vertikalstrebe in einem Abstand von kleiner einer halben Erstreckung der Vertikalstrebe entlang der Längsachse vom ersten bis zum zweiten Ende der Vertikalstrebe ausgebildet. Zum Beispiel ist der Anbindungsbereich ausgehend vom ersten Ende der Vertikalstrebe in einem Abstand von kleiner einem Drittel der Erstreckung der Vertikalstrebe entlang der Längsachse vom ersten bis zum zweiten Ende der Vertikalstrebe ausgebildet.

Beispielsweise erstreckt sich das Stützelement ausgehend vom ersten Ende des Stützelements bis zum zweiten Ende des Stützelements entlang einer Längsachse des Stützelements. Zum Beispiel erstreckt sich das Stützelement durchgehend geradlinig entlang seiner Längsachse. Beispielsweise ist das Stützelement mit seiner Längsachse in eine gleiche Richtung wie die Längsachse der Vertikalstrebe gekippt vorhanden. Beispielsweise liegen die Längsachse des Stützelements und die Längsachse der Vertikalstrebe in einer Längsachsen-Ebene. Zum Beispiel ist die Längsachsen-Ebene quer, beispielsweise senkrecht, zur Anbringelementebene und/oder quer, beispielsweise senkrecht, zur Ebene des Fahrzeugbodens ausgerichtet. Zum Beispiel spannen die Längsachse der Vertikalstrebe und die Längsachse des Stützelements eine Ebene auf, welche senkrecht zur Anbringelementebene ausgerichtet vorhanden ist. Beispielsweise ist im angeordneten Zustand des Gurtgestells am Fahrzeug die durch die beiden Längsachsen der Vertikalstrebe und des Stützelements aufgespannte Ebene senkrecht zur Ebene des Fahrzeugbodens ausgerichtet vorhanden.

Zum Beispiel schließt die Längsachse des Stützelements mit der Anbringelementebene eine Winkel ε ein. Beispielsweise ist der Winkel ε kleiner als der Winkel γ. Zum Beispiel schließt die Längsachse des Stützelements mit der Normalen der Anbringelementebene einen Winkel ϑ ein. Beispielsweise ist der Winkel ϑ größer als der Winkel α.

Auch wird vorgeschlagen, dass das Gurtgestell zwei Stützelemente aufweist. Hierdurch ist eine Abstützung der Vertikalstrebe des Gurtgestells verbessert. Beispielsweise ist ein einziges Stützelement vorhanden. Vorstellbar ist auch, dass ein Stützelement in Form eines Stützfuß ausgebildet ist. Denkbar ist auch, dass genau zwei Stützelement vorhanden sind.

Beispielswiese ist ein erstes Stützelement um den gleichen Winkel und die gleiche Richtung relativ zum Fahrzeugboden gekippt vorhanden, wie die Vertikalstrebe. Zum Beispiel ist dieses erste Stützelement in Form eines Stützfuß ausgebildet und erstreckt sich ausgehend von seinem zweiten Ende, mit welchem das erste Stützelement an der Vertikalstrebe angeordnet ist, in Fahrtrichtung und in Richtung Anbringelement und ist mit seinem ersten Ende am Anbringelement angeordnet vorhanden.

Zum Beispiel sind zwei Stützelemente vorhanden, wobei ein erstes Stützelement die Vertikalstrebe in eine erste Richtung abstützt, z.B. in eine Fahrtrichtung des Fahrzeugs, und ein zweites Stützelement die Vertikalstrebe in eine zweite Richtung abstützt, wobei die erste und die zweite Richtung quer zueinander ausgerichtet vorhanden sind.

Ebenfalls wird eine Fahrzeug-Sitzanordnung mit einem Gurtgestell nach einer der vorangegangen genannten Ausführungsformen vorgeschlagen. Beispielsweise ist die Fahrzeug-Sitzanordnung als ein Fahrzeugsitz und/oder als eine Fahrzeugsitzbank ausgebildet.

Außerdem wird ein Fahrzeug mit einer Fahrzeug-Sitzanordnung nach einer der vorangegangen genannten Ausführungsformen oder mit einem Gurtgestell nach einer der vorangegangen genannten Ausführungsformen vorgeschlagen.

### Figurenbeschreibung

Weitere Merkmale und Vorteile der Erfindung sind anhand schematisch gezeigter Ausführungsbeispiele näher erläutert. Im Einzelnen zeigt:
- Figur 1: eine schematische Frontansicht auf ein Gurtgestell im angeordneten Zustand an einem Fahrzeugboden eines Fahrzeugs,
- Figur 2: eine schematische Frontansicht auf eine weitere Ausführungsform eines Gurtgestells im angeordneten Zustand an einem Fahrzeugboden eines Fahrzeugs,
- Figur 3: eine schematische, perspektivische Ansicht von seitlich, hinten oben auf eine weitere Ausführungsform eines Gurtgestells,
- Figur 4: eine schematische Rückansicht auf das Gurtgestell gemäß Figur 3,
- Figur 5: eine schematische Seitenansicht auf das Gurtgestell gemäß Figur 3,
- Figur 6: eine schematische, perspektivische Ansicht von seitlich, hinten oben auf eine weitere Ausführungsform eines Gurtgestells,
- Figur 7: eine schematische Unteransicht auf das Gurtgestell gemäß Figur 6,
- Figur 8: eine schematische Seitenansicht auf das Gurtgestell gemäß Figur 6,
- Figur 9: eine schematische Rückansicht auf das Gurtgestell gemäß Figur 6,
- Figur 10: eine schematische, seitliche Teilansicht auf ein Gurtgestell mit einer Darstellung von möglichen Ausbildungsvarianten eines Stützelements am Gurtgestell und
- Figur 11: eine schematische Frontansicht auf ein Gurtgestell mit zwei Vertikalstreben.

Im Folgenden werden zum leichteren Verständnis für gleiche Elemente unterschiedlicher Ausführungsformen gleiche Bezugszeichen verwendet.

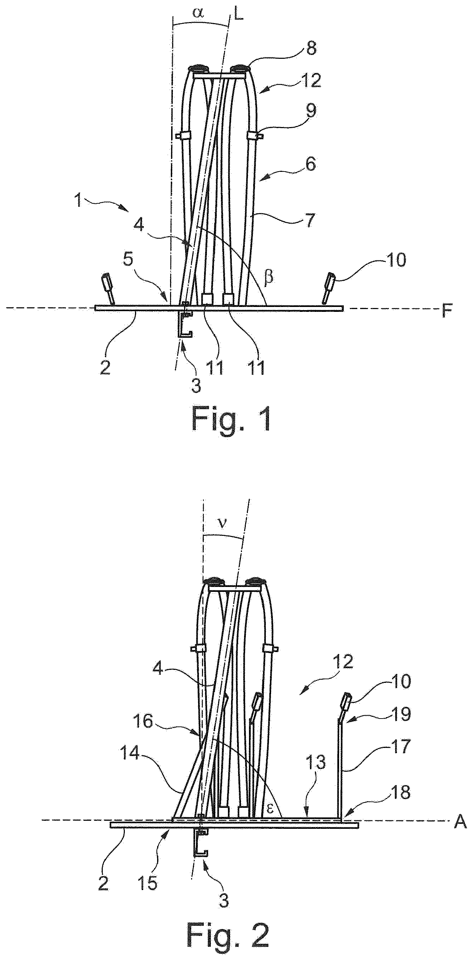

In Figur 1 ist ein Gurtgestell 1 gezeigt, welches an einem Fahrzeugboden 2 eines Fahrzeugs (nicht gezeigt) angeordnet und an einem Fahrzeugrahmen 3 des Fahrzeugs mittels Befestigungsmittel, z.B. in Form von Schrauben oder Nieten, befestigt ist.

Beispielsweise umfasst das Gurtgestell 1 eine Vertikalstrebe 4, welche an einem ersten Ende 5 am Fahrzeugboden 2 aufstehend angeordnet ist. Außerdem kann das Gurtgestell 1 ein Personenrückhaltesystem 6 aufweisen. Beispielweise umfasst das Personenrückhaltesystem 6 einen Sicherheitsgurt 7, eine Gurtumlenkanordnung 8, ein Gurtschloss 9, ein Schließelement 10 und/oder eine Gurtbefestigung 11.

Beispielsweise ist an einem zweiten Ende 12 der Vertikalstrebe 4 die Gurtumlenkanordnung 8 befestigt. Zum Beispiel ist am Fahrzeugboden 2 das Schließelement 10 unmittelbar angeordnet.

Beispielsweise erstreckt sich der Fahrzeugboden 2 in einer Fahrzeugbodenebene F und die Vertikalstrebe 4 entlang einer Längsachse L. Zum Beispiel schließen die Fahrzeugbodenebene F und die Längsachse L der Vertikalstrebe 4 einen Winkel β ein. Beispielsweise schließen die Normale des Fahrzeugbodens F und die Längsachse L der Vertikalstrebe 4 einen Winkel α ein.

Das Gurtgestell 12 gemäß Figur 2 unterscheidet sich vom Gurtgestell 1 gemäß Figur 1 darin, dass das Gurtgestell 12 neben der Vertikalstrebe 4 ein Anbringelement 13 aufweist. Beispielsweise ist das Anbringelement 13 in Form einer Platte ausgebildet.

Zum Beispiel ist die Vertikalstrebe 4 aufstehend auf dem Anbringelement 13 vorhanden. Beispielsweise ist das Anbringelement 13 im angeordneten Zustand des Gurtgestells 12 am Fahrzeugboden 2 aufliegend vorhanden. Denkbar ist, dass im angeordneten Zustand des Gurtgestells 12 am Fahrzeugboden 2 das Anbringelement 13 mit dem Fahrzeugrahmen 3 über Befestigungsmittel verbunden ist. Vorstellbar ist außerdem, dass die Vertikalstrebe 4 mit dem Anbringelement 13 verbunden ist, sodass die Vertikalstrebe 4 über das Anbringelement 13 im angeordneten Zustand des Gurtgestells 12 am Fahrzeugboden 2 mit dem Fahrzeugrahmen 3 verbunden ist.

Beispielsweise erstreckt sich das Anbringelement 13 in einer Anbringebene A. Zum Beispiel schließt die Längsachse L der Vertikalstrebe 4 mit der Anbringebene A eine Winkel ε ein. Beispielsweise schließen eine Normale der Anbringebene A und die Längsachse L der Vertikalstrebe 4 einen Winkel ϑ ein.

Beispielsweise umfasst das Gurtgestell 12 ein Stützelement 14. Beispielsweise ist das Stützelement 14 mit einem ersten Ende 15 am Anbringelement 13 befestigt und mit einem zweiten Ende 16 an der Vertikalstrebe 4. Vorstellbar ist außerdem, dass am Anbringelement 13 ein Verlängerungselement 17 angeordnet ist. Beispielsweise ist das Verlängerungselement 17 in Form einer Gurtpeitsche vorhanden. Zum Beispiel ist das Verlängerungselement 17 mit einem ersten Ende 18 am Anbringelement 13 befestigt und von diesem mit einem zweiten Ende 19 abstehend vorhanden. Beispielsweise ist am zweiten Ende 19 des Verlängerungselements 17 ein Schließelement 10 ausgebildet.

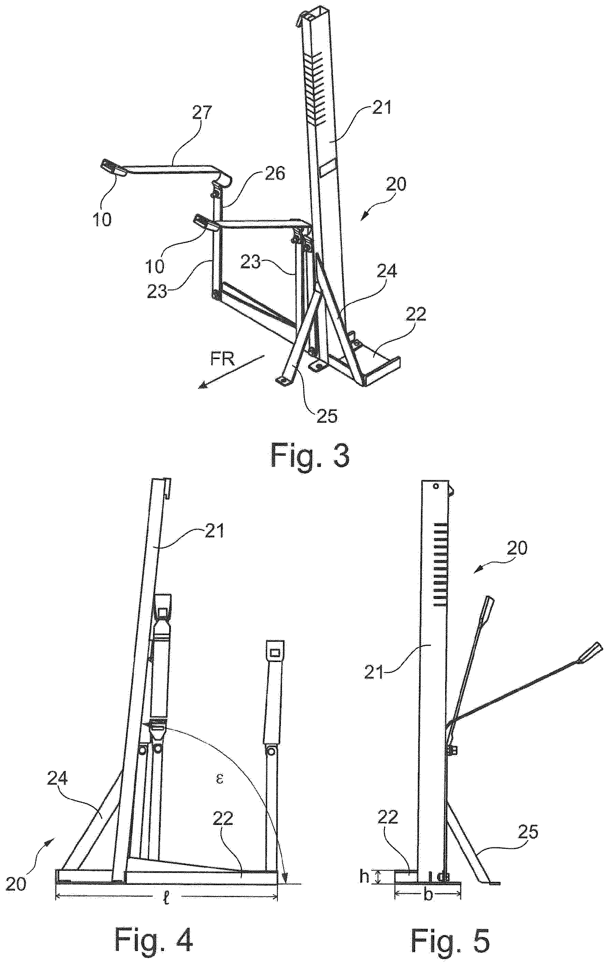

In Figur 3 ist eine weitere Ausführungsform eines Gurtgestells 20 gezeigt. Beispielsweise umfasst das Gurtgestell 20 eine Vertikalstrebe 21, ein Anbringelement 22, Verlängerungselemente 23, ein erstes Stützelement 24 und/oder ein zweites Stützelement 25.

Beispielsweise ist das Anbringelement 22 gemäß Figur 3 als ein abgekantetes Blechbiegeelement ausgebildet. Beispielsweise erstreckt sich das Anbringelement 22 in eine Länge 1, eine Breite b und in eine Höhe h (siehe auch Figuren 4, 5).

Zum Beispiel ist am Gurtgestell 20 das zweite Stützelement 25 in Form eines Stützfuß ausgebildet, sodass das zweite Stützelement 25 die Vertikalstrebe 21 im Belastungsfall im angeordneten Zustand am Fahrzeug in eine Fahrtrichtung FR nach unten zum Fahrzeugboden abstützt. Beispielsweist umfasst das Gurtgestell 20 das erste Stützelement 24, welches die Vertikalstrebe 21 analog zum Stützelement 14 gemäß der Ausführung des Gurtgestells 12 seitlich abstützt.

Beispielsweise sind am Anbringelement 22 des Gurtgestells 20 in vertikaler Richtung vom Anbringelement 22 abstehende Verlängerungselemente 23 angeordnet. Zum Beispiel sind die Verlängerungselemente 23 aus einer Metallstrebe 26 und einem daran angeordneten, z.B. flexiblem, Gurtband 27 gebildet, an dessen Ende ein Schließelement 10 angeordnet ist.

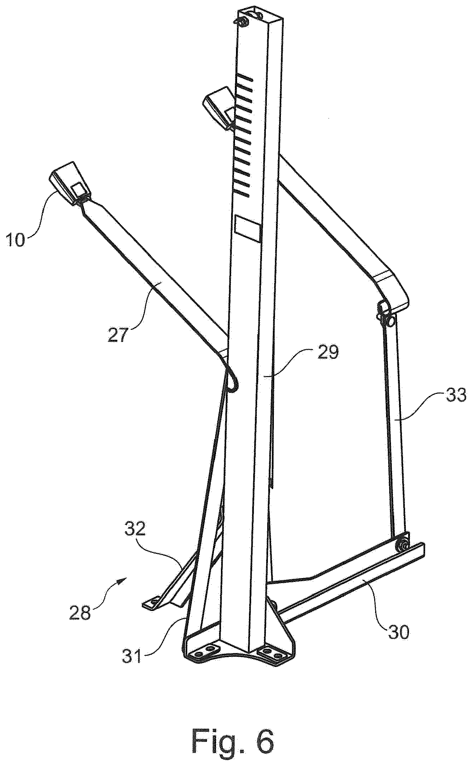

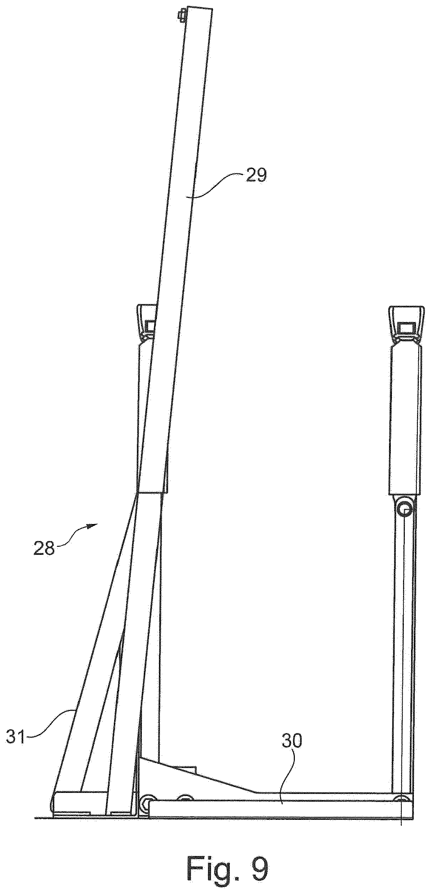

In den Figuren 6 bis 9 ist eine weitere Ausführungsform eines Gurtgestells 28 gezeigt. Beispielsweise umfasst das Gurtgestell 28 eine Vertikalstrebe 29, ein Anbringelement 30, ein erstes Stützelement 31, ein zweites Stützelement 32 und/oder ein Verlängerungselement 33.

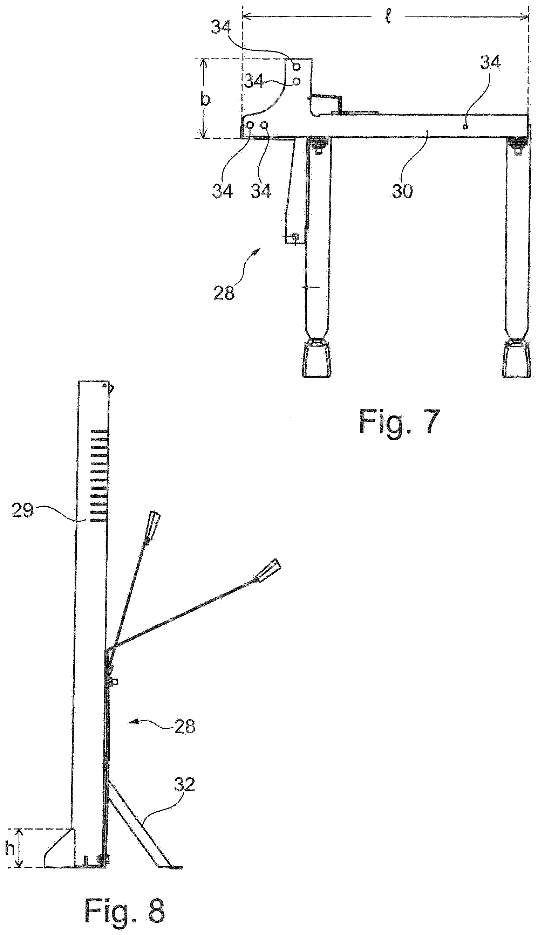

In Figur 7 ist gezeigt, dass am Anbringelement 30 Montageorgane 34 ausgebildet sind, um das Anbringelement 30 im angeordneten Zustand am Fahrzeug mit dem Fahrzeug zu verbinden. Beispielsweise sind die Montageorgane 34 in Form von Durchgangslöchern oder Bohrungen am Anbringelement 30 ausgebildet.

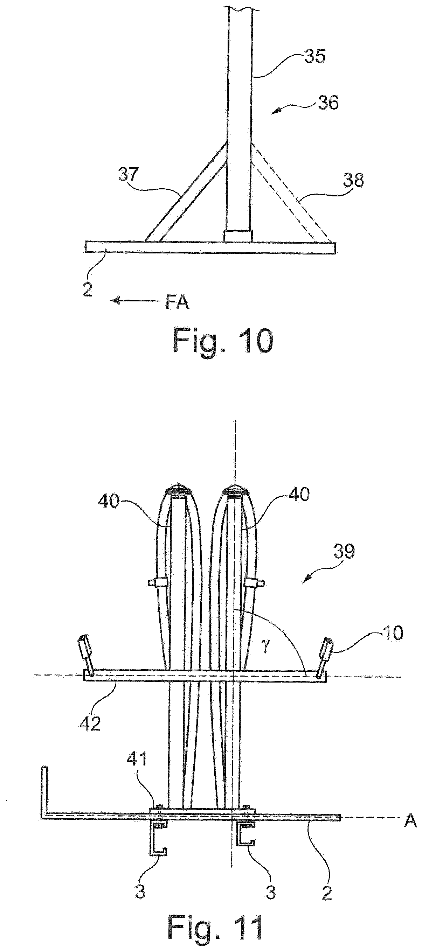

In Figur 10 ist schematisch dargestellt, dass eine Vertikalstrebe 35 eines Gurtgestells 36 durch ein Stützelement 37, 38 entweder in Fahrtrichtung FA oder entgegen der Fahrtrichtung FA im angeordneten Zustand am Fahrzeug abstützbar ist.

In Figur 11 ist eine weitere Ausführungsform eines Gurtgestells 39 gezeigt. Beispielsweise umfasst das Gurtgestell 39 zwei Vertikalstreben 40. Zum Beispiel sind die beiden Vertikalstreben 40 zueinander parallel ausgerichtet vorhanden. Denkbar ist, dass die Längsachsen der Vertikalstreben 40 zueinander parallel ausgerichtet vorhanden sind. Zum Beispiel umfasst das Gurtgestell 40 ein Anbringelement 41 und eine Horizontalstrebe 42. Beispielsweise ist die Horizontalstrebe 42 quer zur Längserstreckung der Vertikalstreben 409 ausgerichtet vorhanden. Beispielsweise ist an der Horizontalstrebe 42 ein Schließelement 10 angeordnet.

Beispielweise sind die Vertikalstreben 40 relativ zum Fahrzeugboden 2 oder zur Anbringebene A des Anbringelements 41 gekippt vorhanden, z.B. in die Bildebene nach hinten. Schematisch ist hierzu in Figur 11 der Winkel γ der Längsachse L der Vertikalstrebe 40 relativ zur Längsachse der Horizontalstrebe 42 angedeutet.

**Bezugszeichenliste**

| | | | |
|---|---|---|---|
| 1 | Gurtgestell | 22 | Anbringelement |
| 2 | Fahrzeugboden | 23 | Verlängerungselemente |
| 3 | Fahrzeugrahmen | 24 | Stützelement |
| 4 | Vertikalstrebe | 25 | Stützelement |
| 5 | Ende | 26 | Metallstrebe |
| 6 | Personenrückhaltesystem | 27 | Gurtband |
| 7 | Sicherheitsgurt | 28 | Gurtgestell |
| 8 | Gurtumlenkanordnung | 29 | Vertikalstrebe |
| 9 | Gurtschloss | 30 | Anbringelement |
| 10 | Schließelement | 31 | Stützelement |
| 11 | Gurtbefestigung | 32 | Stützelement |
| 12 | Gurtgestell | 33 | Verlängerungselement |
| 13 | Anbringelement | 34 | Montageorgan |
| 14 | Stützelement | 35 | Vertikalstrebe |
| 15 | Ende | 36 | Gurtgestell |
| 16 | Ende | 37 | Stützelement |
| 17 | Verlängerungselement | 38 | Stützelement |
| 18 | Ende | 39 | Gurtgestell |
| 19 | Ende | 40 | Vertikalstrebe |
| 20 | Gurtgestells | 41 | Anbringelement |
| 21 | Vertikalstrebe | 42 | Horizontalstrebe |

## Patentansprüche

1. Gurtgestell (1, 12, 20, 28, 36, 39) für einen Fahrzeugsitz oder eine Fahrzeugsitzbank in einem Fahrzeug, wobei das Gurtgestell (1, 12, 20, 28, 36, 39) ein Anbringelement (13, 22, 30, 41) und eine Vertikalstrebe (4, 21, 29, 35, 40) aufweist, wobei das Anbringelement (13, 22, 30, 41) dazu ausgebildet ist, an einer Fahrzeugstruktur (3) des Fahrzeugs im Bereich eines Fahrzeugbodens (2) angeordnet zu werden, sodass das Gurtgestell (1, 12, 20, 28, 36, 39) im Bereich des Fahrzeugbodens (2) fixierbar ist, wobei die Vertikalstrebe (4, 21, 29, 35, 40) an einem ersten Ende (5) der Vertikalstrebe (4, 21, 29, 35, 40) mit dem Anbringelement (13, 22, 30, 41) verbunden ist, wobei die Vertikalstrebe (4, 21, 29, 35, 40) ein zweites Ende aufweist, wobei im Bereich des zweiten Endes der Vertikalstrebe (4, 21, 29, 35, 40) ein Rückhalteelement (8) eines Personenrückhaltesystems (6) ausgebildet ist, wobei das zweite Ende der Vertikalstrebe (4, 21, 29, 35, 40) vom ersten Ende der Vertikalstrebe (4, 21, 29, 35, 40) beabstandet vorhanden ist, wobei eine Längsachse der Vertikalstrebe (4, 21, 29, 35, 40) vom ersten Ende der Vertikalstrebe (4, 21, 29, 35, 40) zum zweiten Ende der Vertikalstrebe (4, 21, 29, 35, 40) verläuft, wobei die Vertikalstrebe (4, 21, 29, 35, 40) vom ersten Ende zum zweiten Ende geradlinig verläuft, wobei im angeordneten Zustand des Gurtgestells (1, 12, 20, 28, 36, 39) an einem Fahrzeugboden (2) des Fahrzeugs die Längsachse der Vertikalstrebe (4, 21, 29, 35, 40) relativ zu der Normalen einer Ebene des Fahrzeugbodens (2) gekippt vorhanden ist.

2. Gurtgestell (1, 12, 20, 28, 36, 39) nach dem vorangegangenen Anspruch 1, **dadurch gekennzeichnet, dass** am Anbringelement (13, 22, 30, 41) ein Rückhalteorgan (10) des Personenrückhaltesystems (6) vorhanden ist.

3. Gurtgestell (1, 12, 20, 28, 36, 39) nach einem der vorangegangenen Ansprüche, **dadurch gekennzeichnet, dass** das Gurtgestell (1, 12, 20, 28, 36, 39) eine Horizontalstrebe (42) aufweist, wobei die Horizontalstrebe (42) an der Vertikalstrebe (4, 21, 29, 35, 40) angeordnet ist, wobei die Horizontalstrebe (42) vom Anbringelement (13, 22, 30, 41) beabstandet vorhanden ist.

4. Gurtgestell (1, 12, 20, 28, 36, 39) nach einem der vorangegangenen Ansprüche, **dadurch gekennzeichnet, dass** ein Schließelement (10) des Personenrückhaltesystems (6) an der Horizontalstrebe (42) vorhanden ist.

5. Gurtgestell (1, 12, 20, 28, 36, 39) nach einem der vorangegangenen Ansprüche, **dadurch gekennzeichnet, dass** ein Schließelement (10) des Personenrückhaltesystems (6) am Anbringelement (13, 22, 30, 41) angeordnet ist.

6. Gurtgestell (1, 12, 20, 28, 36, 39) nach einem der vorangegangenen Ansprüche, **dadurch gekennzeichnet, dass** das Anbringelement (13, 22, 30, 41) eine Anbringebene aufweist, wobei das Anbringelement (13, 22, 30, 41) mit der Anbringebene am Fahrzeugboden (2) des Fahrzeugs und/oder einer Fahrzeugstruktur (3) des Fahrzeugs anliegend montierbar iat, wobei die Längsachse der Vertikalstrebe (4, 21, 29, 35, 40) zur Normalen der Anbringebene des Anbringelements (13, 22, 30, 41) gekippt vorhanden ist.

7. Gurtgestell (1, 12, 20, 28, 36, 39) nach einem der vorangegangenen Ansprüche, **dadurch gekennzeichnet, dass** das Gurtgestell (1, 12, 20, 28, 36, 39) eine einzige Vertikalstrebe (4, 21, 29, 35, 40) aufweist.

8. Gurtgestell (1, 12, 20, 28, 36, 39) nach einem der vorangegangenen Ansprüche, **dadurch gekennzeichnet, dass** das Gurtgestell (1, 12, 20, 28, 36, 39) ein Stützelement (14, 24, 25, 31, 32, 37, 38) umfasst, wobei das Stützelement Stützelement (14, 24, 25, 31, 32, 37, 38) mit einem ersten Ende am Anbringelement (13, 22, 30, 41) angeordnet ist und mit einem zweiten Ende an der Vertikalstrebe (4, 21, 29, 35, 40) angeordnet ist, wobei das erste Ende des Stützelements Stützelement (14, 24, 25, 31, 32, 37, 38) vom zweiten Ende des Stützelements Stützelement (14, 24, 25, 31, 32, 37, 38) beabstandet vorhanden ist.

9. Gurtgestell (1, 12, 20, 28, 36, 39) nach einem der vorangegangenen Ansprüche, **dadurch gekennzeichnet, dass** das Gurtgestell (1, 12, 20, 28, 36, 39) zwei Stützelemente Stützelement (24, 25, 31, 32, 37, 38) aufweist.

10. Fahrzeug-Sitzanordnung mit einem Gurtgestell (1, 12, 20, 28, 36, 39) nach einem der vorangegangen genannten Ansprüche.

11. Fahrzeug mit einer Fahrzeug-Sitzanordnung nach dem vorangegangenen Anspruch 10 oder mit einem Gurtgestell (1, 12, 20, 28, 36, 39) nach einem der vorangegangenen Ansprüche 1 bis 9.
